# NOUVEAU FASCICULE DE BREVET EUROPEEN

(11) **EP 3 271 618 B2**
(45) Date de publication et mention de la décision concernant l'opposition: **17.01.2024**
(45) Mention de la délivrance du brevet: 04.03.2020
(21) Numéro de dépôt: 16714780.0
(22) Date de dépôt: 17.03.2016
(51) Int. Cl.: F16H 57/023, B02C 15/00, B02C 17/24

(54) **RÉDUCTEUR POUR BROYEUR À AGITATION, BROYEUR ET UTILISATION CORRESPONDANTS**
UNTERSETZUNGSGETRIEBE FÜR RÜHRMÜHLE SOWIE ENTSPRECHENDE MÜHLE UND VERWENDUNG
REDUCTION GEAR FOR A STIRRED MILL, AND CORRESPONDING MILL AND USE

(30) Priorité: 17.03.2015 FR 1552194
(43) Date de publication de la demande: 24.01.2018
(73) Titulaire: Compagnie Engrenages et Reducteurs-Messian-Durand, 59400 Cambrai (FR)
(72) Inventeur: LESSARD, Fabrice, 59400 Cambrai (FR)
(74) Mandataire: Lavoix
(86) Numéro de dépôt international: PCT/EP2016/055782
(87) Numéro de publication internationale: WO 2016/146734

(56) Documents cités:
- EP-A1- 1 757 839
- CN-A- 102 728 440
- DE-A1- 3 226 816
- DE-A1- 19 917 609
- US-A- 3 438 462
- US-A- 4 572 442

## Description

L'invention concerne un réducteur entraînant un broyeur par agitation, du type comprenant : L'invention concerne un réducteur pour l'entrainement d'un broyeur par agitation, du type comprenant :
un carter de réducteur,
un arbre d'entrée adapté pour être relié à un moteur d'entrainement,
un étage de réduction disposé dans le carter de réducteur, et
un arbre de sortie, qui s'étend selon un axe de sortie (Y-Y).

US4572442 décrit un broyeur à rouleaux et table de broyage contenant un réducteur pour l'entrainement de la table de broyage.

On connait dans l'état de la technique des broyeurs par agitation comprenant un élément de broyage par agitation et un carter de broyeur. Les broyeurs par agitation, du type connu comprennent également un réducteur et un moteur pour l'entrainement de l'élément de broyage par agitation.

L'élément de broyage par agitation est généralement guidé par un palier radial et un palier axial disposé sur le carter de broyage. L'élément de broyage est relié par un accouplement élastique à l'arbre de sortie du réducteur de telle sorte que l'arbre de sortie du réducteur est sollicité uniquement par l'effort en rotation.

Eventuellement, l'extrémité distale de l'élément de broyage est montée sur un palier radial disposé dans le carter de broyage.

Les solutions de l'état de la technique ne permettent pas de transmettre une forte puissance étant donné que les efforts appliqués deviennent trop importants pour être repris par les paliers du carter de broyage. De plus, les broyeurs par agitation connus sont compliqués à assembler.

L'invention a pour but de concevoir un réducteur pour l'entrainement d'un broyeur par agitation qui permet la reprise d'importants efforts de broyage pour des dimensions données du broyeur. De plus, l'invention a pour but de proposer un réducteur pour l'entrainement d'un broyeur par agitation qui permet un montage plus économique de l'élément de broyage par agitation. Le réducteur doit en particulier être adapté pour les broyeurs par agitation de très hautes puissances, notamment supérieures à 746kW (1000 HP).

L'invention a pour objet un réducteur entrainant un broyeur par agitation tel que défini ci-dessus, avec les caractéristiques de la revendication 1.

Selon des modes de réalisation particuliers, le réducteur selon l'invention peut comporter l'une ou plusieurs des caractéristiques suivantes :
la butée axiale est soit un palier axial, notamment hydrostatique ou hydrodynamique, soit une butée à éléments roulants ;
le carter de réducteur comprend une paroi de sortie délimitant une ouverture de sortie qui est traversée par l'arbre de sortie, le réducteur comprend un palier radial de sortie, notamment un roulement radial, disposé dans l'ouverture de sortie, et l'arbre de sortie est guidé par rapport à la paroi de sortie par le palier radial de sortie ;
la butée axiale est disposée axialement entre l'étage de réduction et la paroi de sortie, notamment dans lequel la butée axiale prend appui sur la paroi de sortie ;
l'étage de réduction comprend un étage de réduction planétaire, et cet étage de réduction planétaire est muni :
   d'un porte-satellite,
   d'une couronne,
   d'une roue solaire, et
   de roues satellite,
   notamment l'arbre de sortie est fixé au porte-satellite et/ou l'arbre d'entrée est fixé à la roue solaire ; et
   l'étage de réduction comprend au moins un train d'engrenage parallèle simple, notamment à roues dentées cylindriques.

L'invention concerne un broyeur par agitation selon la revendication 1.

Le broyeur par agitation peut comporter l'une ou plusieurs des caractéristiques suivantes :
- l'élément de broyage est guidé et maintenu par rapport au carter de broyage complètement par l'intermédiaire du réducteur d'entrainement ;
- l'élément de broyage est maintenu en porte-à-faux par le réducteur par rapport au carter de broyage et/ou, l'élément de broyage comprend une extrémité libre qui est espacé du carter de broyage ;
- tous les efforts agissant sur l'élément de broyage par agitation, et notamment tous les efforts de broyage, sont repris uniquement par la butée axiale, et éventuellement par le palier radial.

L'invention concerne également l'utilisation d'un broyeur tel que défini ci-dessus, comprenant l'étape :
reprise de tous les efforts agissant sur l'élément de broyage par agitation, et notamment tous les efforts de broyage, en particulier lors d'un broyage à une puisance nominale du broyeur, par la butée axiale, et éventuellement par le palier radial..

L'invention sera mieux comprise à la lecture de la description qui va suivre, donnée uniquement à titre d'exemple et faite en se référant aux dessins annexés, sur lesquels :
- la figure 1 est une vue schématique d'un broyeur par agitation selon l'invention ; et

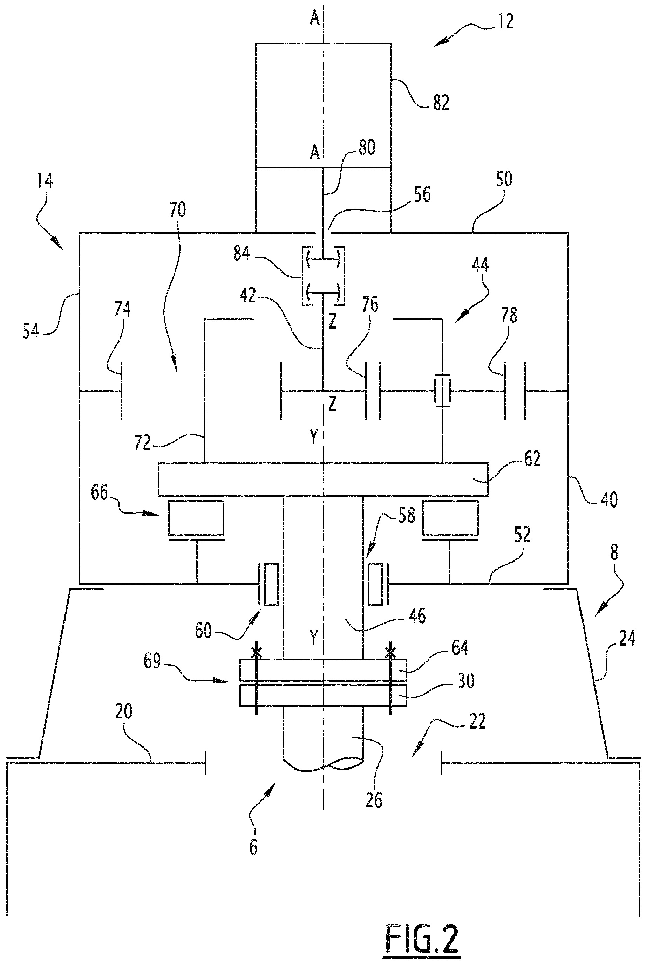

- la figure 2 est une vue schématique à plus grande échelle et en coupe d'une partie du broyeur par agitation de la figure 1.

Dans ce qui suit, sauf indication contraire, les expressions « axialement » et « radialement » seront utilisées par rapport à l'axe de l'élément auquel elles se réfèrent.

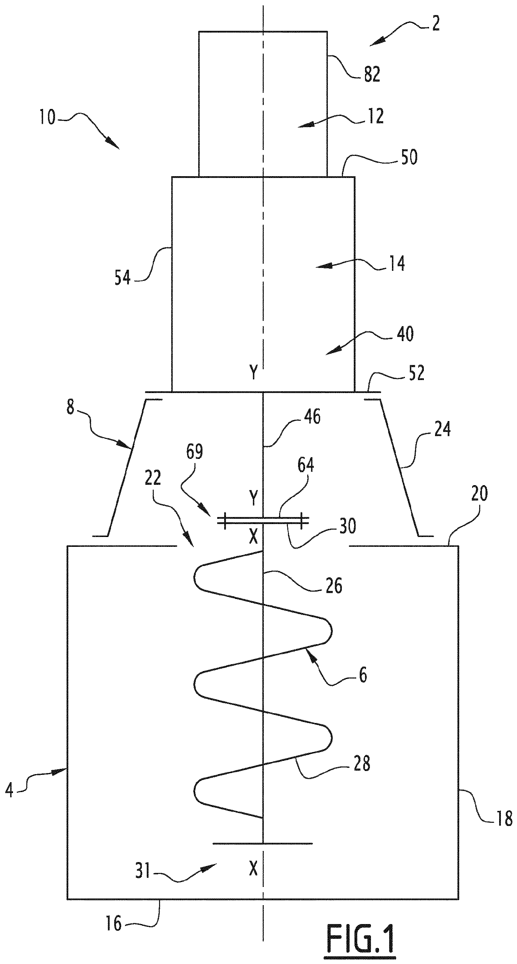

Sur la figure 1 est représenté un broyeur par agitation selon l'invention, désigné par la référence générale 2.

Le broyeur par agitation 2 comprend un carter de broyage 4, un élément de broyage 6 par agitation, un support d'entrainement 8, et un dispositif d'entrainement 10 de l'élément de broyage 6.

Le dispositif d'entrainement 10 est muni d'un moteur d'entrainement 12 et d'un réducteur 14. Le dispositif d'entrainement 10 est adapté pour entrainer l'élément de broyage 6 en rotation, par l'intermédiaire du moteur d'entrainement 12 et du réducteur 14. Le moteur d'entrainement 12 est un moteur électrique notamment ayant une puissance nominale supérieure à 746kW (1000 hp).

Le carter de broyage 4 est muni d'une paroi de fond 16, d'une paroi latérale 18, qui est par exemple cylindrique, notamment à section circulaire, et d'une paroi de plafond 20. Le support d'entrainement 8 est disposé sur la paroi de plafond 20 et sert d'entretoise entre le carter de broyage 4 et le réducteur 14. Le support d'entrainement 8 comprend par exemple une paroi de support tronconique 24 et deux brides de fixation. En variante, le support d'entrainement 8 est omis. Dans ce cas, le carter de broyage 4 est adjacent au carter de réducteur 40.

La paroi de plafond 20 délimite une ouverture de carter 22 à travers laquelle s'étend l'élément de broyage 6 à l'intérieur du carter de broyage 4.

L'élément de broyage 6 s'étend selon un axe de broyage X-X, disposé verticalement. L'élément de broyage 6 comprend un arbre de broyage 26, s'étendant selon l'axe de broyage X-X, et au moins un organe de broyage 28, par exemple une hélice de broyage. L'organe de broyage 28 peut également comprendre des disques de broyage ou des doigts de broyage s'étendant perpendiculairement par rapport à l'axe de broyage X-X.

L'arbre de broyage 26 est muni d'une bride de fixation 30, qui forme une extrémité axiale de liaison de l'organe de broyage 6. Par ailleurs, l'élément de broyage 6 comprend une extrémité axiale 31 libre. Cette extrémité axiale 31 est espacée du carter de broyage 4 et n'est pas soutenue par un palier radial disposé dans le carter de broyage 4. Plus particulièrement, l'extrémité axiale 31 est disposée à distance de la paroi de fond 16. L'élément de broyage 6 est maintenu en porte-à-faux par le réducteur 14 par rapport au carter de broyage 4.

Le réducteur 14 est muni d'un carter de réducteur 40, d'un arbre d'entrée 42, d'un étage de réduction 44, et d'un arbre de sortie 46.

Le réducteur 14 est adapté pour transmettre une rotation de l'arbre d'entrée 42 à l'arbre de sortie 46. La vitesse de rotation de sortie est inférieure à la vitesse de rotation d'entrée.

Le carter de réducteur 40 comprend une paroi d'entrée 50, associée à l'arbre d'entrée 42, une paroi de sortie 52, associée à l'arbre de sortie 46, et une paroi de liaison 54 reliant la paroi d'entrée 50 à la paroi de sortie 52. La paroi de liaison 54 est généralement cylindrique, notamment à section circulaire. La paroi d'entrée 50 délimite une ouverture d'entrée 56. La paroi de sortie 52 délimite une ouverture de sortie 58 qui est traversée par l'arbre de sortie 46.

L'arbre de sortie 46 s'étend selon un axe de sortie Y-Y et l'arbre d'entrée 42 s'étend selon un axe d'entrée Z-Z. Ces deux axes Y-Y et Z-Z sont coaxiaux.

Le réducteur 14 comprend également un palier radial de sortie 60, qui est par exemple un roulement radial. L'arbre de sortie 46 est guidé radialement par rapport à la paroi de sortie 52 par le palier radial de sortie 60. Le palier radial de sortie 60 est disposé dans l'ouverture de sortie 58.

Le palier radial de sortie 60 est par exemple un roulement à éléments roulants cylindriques.

L'arbre de sortie 46 comprend un côté axial proximal, associé à l'étage de réduction 44. Le côté axial proximal est formé par une bride de support 62. L'arbre de sortie 46 comprend un côté axial distal, associé à l'élément de broyage 6. Le côté axial distal est formé par une bride de fixation 64.

Le réducteur 14 est muni d'une butée axiale 66, qui est adaptée pour guider axialement l'arbre de sortie 46 et qui est adaptée pour limiter un déplacement axial de l'arbre de sortie 46 par rapport au carter de réducteur 40 le long de l'axe de sortie Y-Y dans un sens dirigé du côté axial proximal vers le côté axial distal. La butée axiale 66 guide axialement l'arbre de sortie 46 et limite le déplacement axial de l'arbre de sortie 46 par rapport au carter de réducteur 40 le long de l'axe de sortie Y-Y dans le sens dirigé du côté axial proximal vers le côté axial distal. A cet effet, la bride de support 62 s'appuie sur la butée axiale 66 et la butée axiale 66 est supportée par la paroi de sortie 52.

La butée axiale 66 est donc disposée axialement entre la bride de support 62 et la paroi de sortie 52. La butée axiale 66 prend appui sur la paroi de sortie 52.

La butée axiale 66 est un palier à patins hydrostatique ou un palier à patins hydrodynamique. Ces paliers peuvent supporter des efforts très importants. En variante, la butée axiale 66 est une butée à éléments roulants, par exemple à rouleaux ou à billes.

Ainsi, tous les efforts agissant sur l'élément de broyage 6, et notamment tous les efforts de broyage générés par le processus de broyage, sont transmis sur l'arbre de sortie 46 et sont repris par la paroi de sortie 52.

En particulier, tous les efforts radiaux générés par le processus de broyage et appliqués sur l'élément de broyage 6 sont transmis sur l'arbre de sortie 46 et sont repris par le palier radial de sortie 60 sur la paroi de sortie 52.

Le couple généré par le processus de broyage, appliqué sur l'élément de broyage 6 et agissant autour d'un axe perpendiculaire à l'axe de broyage X-X ou à l'axe de sortie Y-Y, est transmis sur l'arbre de sortie 46 et est transmis par la butée axiale 66 sur la paroi de sortie 52.

Le poids de l'élément de broyage 6 et agissant verticalement vers le bas est également repris intégralement par la butée axiale 66. L'élément de broyage 6 est suspendue par l'arbre de sortie 46 à la butée axiale 66.

Tous les efforts axiaux générés par le processus de broyage et appliqués sur l'élément de broyage 6 sont transmis sur l'arbre de sortie 46 et sont repris par la butée axiale 66 sur la paroi de sortie 52.

La bride de fixation 64 de l'arbre de sortie 46 est fixée à la bride de fixation 30 de l'élément de broyage par agitation 6, et ceci aussi bien axialement que radialement. Le broyeur par agitation comprend un accouplement de fixation 69 de l'arbre de sortie 46 à l'élément de broyage. Cet accouplement de fixation 69 est rigide, c'est-à-dire ne permet pas de déplacement de l'arbre de sortie 46 par rapport à l'élément de broyage 6 lors de l'opération de broyage. L'accouplement de fixation 69 n'a donc aucun degré de liberté. Dans le cas présent, l'accouplement de fixation 69 comprend la bride de fixation 64 de l'arbre de sortie 46 et la bride de fixation 30 de l'élément de broyage par agitation 6.

L'étage de réduction 44 comprend un étage de réduction planétaire 70 qui est muni d'un porte-satellite 72, d'une couronne 74, d'une roue solaire 76, et de roues satellites 78.

L'arbre de sortie 46 est fixé en rotation au porte-satellite 72, notamment est solidaire en rotation et translation par rapport au porte-satellite 72. Plus particulièrement, l'arbre de sortie 46 est solidaire de la bride de support 62 qui est solidaire du porte-satellite 72. De préférence, la bride de support 62 et/ou le porte-satellite 72 et/ou l'arbre de sortie 46 sont d'un seul tenant ou d'une seule pièce. La couronne 74 est fixée au carter de réducteur 40 et est par exemple solidaire de la paroi de liaison 54.

L'arbre d'entrée 42 est fixé à la roue solaire 76, notamment ces deux éléments sont d'un seul tenant ou d'une seule pièce.

Le moteur d'entrainement 12 comprend un arbre de moteur 80, d'axe de moteur A-A et un carter de moteur 82. L'arbre de moteur 80 est relié à l'arbre d'entrée 42 par l'intermédiaire d'un accouplement 84. L'accouplement 84 est adapté pour transmettre une rotation de l'arbre de moteur 80 à l'arbre d'entrée 42 tout en permettant un désalignement radial et/ou angulaire entre l'axe d'entrée Z-Z et l'axe de moteur A-A. Le désalignement radial minimum permis est par exemple de 5mm. Le désalignement angulaire minimum permis entre l'axe d'entrée Z-Z et l'axe de moteur A-A est par exemple de 1°.

Le carter de réducteur 40 et le carter de broyage 4 sont des éléments distincts et séparables et ne sont pas fabriqués d'une seule pièce ou d'un seul tenant.

Comme ceci est visible sur la figure 1, l'élément de broyage 6 est guidé par rapport au carter de broyage 4 uniquement par l'intermédiaire du réducteur d'entrainement 14 et plus particulièrement uniquement par le palier radial 60 et la paroi de sortie 52.

L'accouplement de fixation 69 est situé axialement entre l'arbre de broyage 26 et le palier radial de sortie 60. De plus, l'accouplement de fixation 69 est situé axialement entre l'arbre de broyage 26 et la butée axiale 66.

Aucun autre palier radial ou axial supportant l'élément de broyage 6 n'est disposé sur l'élément de broyage 6.

Lors du fonctionnement du broyeur par agitation 2, l'arbre de broyage 26 est entrainé en rotation par l'intermédiaire du moteur 12 et du réducteur 14. Les efforts de broyage radiaux, axiaux et en couple agissant sur l'élément de broyage 6, notamment lors du fonctionnement en puissance nominale du broyeur, sont transmis intégralement par l'accouplement de fixation 69 et sont repris uniquement par le palier radial 60 et par la butée axiale 66 et sont transmis uniquement par le carter de réducteur 40 sur le carter de broyage 4, éventuellement via le support d'entrainement 8.

Selon l'invention, on utilise le réducteur ou le broyeur pour la reprise de tous les efforts agissant sur l'élément de broyage par agitation, et notamment tous les efforts de broyage, en particulier lors d'un broyage à une puissance nominale du broyeur, par la butée axiale 66, et éventuellement par le palier radial 60.

La structure du broyeur et du réducteur décrite ci-dessus permet la reprise d'efforts très importants de broyage pour des dimensions données. Egalement, la hauteur totale de la structure est faible grâce à l'intégration de la butée axiale dans le réducteur. Ceci conduit également à un montage simple et de faible encombrement pour une force de broyage et de transmission donnée.

En variante, le réducteur ne comporte pas uniquement un seul étage de réduction planétaire 70, mais l'arbre d'entrée 42 est relié à un étage de réduction planétaire supplémentaire comportant un arbre d'entrée 42 qui est lié à l'arbre 80. Le réducteur peut également comprendre trois ou quatre étages de réduction planétaires montés en cascade.

En variante, le réducteur ne comprend pas d'étage de réduction planétaire, mais un ou plusieurs étages de réduction constituée(s) de trains d'engrenages parallèles simples, notamment à roues dentées cylindriques.

En variante, le réducteur peut être réalisé par une combinaison d'étages de réduction planétaires et de trains d'engrenages parallèles simples.

## Revendications

1. Broyeur par agitation (2), du type comprenant :
- un carter de broyage (4),
- un élément de broyage par agitation (6),
- un réducteur d'entrainement (14) de l'élément de broyage,
**caractérisé en ce que** le réducteur d'entrainement comprend :
- un carter de réducteur (40),
- un arbre d'entrée (42) adapté pour être relié à un moteur d'entrainement,
- un étage de réduction (44) disposé dans le carter de réducteur, et
- un arbre de sortie (46), qui s'étend selon un axe de sortie (Y-Y), **en ce que**
cet arbre de sortie (46) est relié à un élément de broyage par agitation et qui est adapté pour être entrainé par l'étage de réduction, **en ce que**
- l'arbre de sortie (46) comprend un côté axial proximal, associé à l'étage de réduction (44), et un côté axial distal, opposé au côté axial proximal et destiné à être fixé à l'élément de broyage par agitation, **en ce que**
- le réducteur comprend une butée axiale (66), qui est adaptée pour guider axialement l'arbre de sortie (46) et qui est adaptée pour limiter un déplacement axial de l'arbre de sortie (46) dans un sens dirigé du côté axial proximal vers le côté axial distal, et **en ce que**
- l'élément de broyage par agitation (6) est fixé à l'arbre de sortie (46) par un accouplement de fixation (69).

2. Broyeur par agitation selon la revendication 1, dans lequel la butée axiale (66) est soit un palier axial, notamment hydrostatique ou hydrodynamique, soit une butée à éléments roulants.

3. Broyeur par agitation selon la revendication 1 ou 2, dans lequel
- le carter de réducteur (40) comprend une paroi de sortie (52) délimitant une ouverture de sortie (58) qui est traversée par l'arbre de sortie,
- le réducteur comprend un palier radial de sortie (60), notamment un roulement radial, disposé dans l'ouverture de sortie, et
- l'arbre de sortie (46) est guidé par rapport à la paroi de sortie par le palier radial de sortie.

4. Broyeur par agitation selon la revendication 3, dans lequel la butée axiale (66) est disposée axialement entre l'étage de réduction et la paroi de sortie (52), notamment dans lequel la butée axiale (66) prend appui sur la paroi de sortie.

5. Broyeur par agitation selon l'une quelconque des revendications précédentes, dans lequel, l'arbre de sortie (46) comprend une bride de fixation (64) adaptée pour fixer l'élément de broyage par agitation.

6. Broyeur par agitation selon l'une quelconque des revendications 1 à 5, dans lequel l'étage de réduction (44) comprend un étage de réduction planétaire (70), et dans lequel cet étage de réduction planétaire est muni :
- d'un porte-satellite (72),
- d'une couronne (74),
- d'une roue solaire (76), et
- de roues satellite (78),
- notamment dans lequel l'arbre de sortie (46) est fixé au porte-satellite (72) et/ou dans lequel l'arbre d'entrée (42) est fixée à la roue solaire (76).

7. Broyeur par agitation selon l'une quelconque des revendications 1 à 6, dans lequel l'étage de réduction comprend au moins un train d'engrenage parallèle simple, notamment à roues dentées cylindriques.

8. Broyeur par agitation selon l'une quelconque des revendications 1 à 7, dans lequel l'élément de broyage (6) est guidé et maintenu par rapport au carter de broyage (4) complètement par l'intermédiaire du réducteur d'entrainement.

9. Broyeur par agitation selon l'une quelconque des revendications 1 à 8, dans lequel l'élément de broyage (6) est maintenu en porte-à-faux par le réducteur (14) par rapport au carter de broyage (4) et/ou, dans lequel l'élément de broyage (6) comprend une extrémité libre qui est espacé du carter de broyage.

10. Broyeur par agitation selon l'une quelconque des revendications 1 à 9, dans lequel tous les efforts agissant sur l'élément de broyage par agitation, et notamment tous les efforts de broyage, sont repris uniquement par la butée axiale (66), et éventuellement par le palier radial (60).

11. Utilisation d'un broyeur selon l'une quelconque des revendications 1 à 10 **caractérisé par** l'étape :
- reprise de tous les efforts agissant sur l'élément de broyage par agitation, et notamment tous les efforts de broyage, en particulier lors d'un broyage à une puissance nominale du broyeur, par la butée axiale (66), et éventuellement par le palier radial (60).
reprise de tous les efforts agissant sur l'élément de broyage par agitation, et notamment tous les efforts de broyage, en particulier lors d'un broyage à une puissance nominale du broyeur, par la butée axiale, et éventuellement par le palier radial..

## Patentansprüche

1. Kugelmühle (2), der Art, die Folgendes umfasst:
- ein Mahlgehäuse (4),
- ein Kugelmahlelement (6),
- ein Antriebsuntersetzungsgetriebe (14) des Mahlelements, **dadurch gekennzeichnet, dass** das Antriebsgetriebe Folgendes umfasst:
- ein Untersetzungsgetriebegehäuse (40),
- eine Eingangswelle (42), die angepasst ist, um mit einem Antriebsmotor verbunden zu werden,
- eine Untersetzungsstufe (44), die in dem Untersetzungsgetriebegehäuse angeordnet ist, und
- eine Ausgangswelle (46), die sich entlang einer Ausgangsachse (Y-Y) erstreckt, dadurch, dass
diese Ausgangswelle (46) mit einem Kugelmahlelement verbunden ist und das angepasst ist, um von der Untersetzungsstufe angetrieben zu werden, dadurch, dass
- die Ausgangswelle (46) eine proximale axiale Seite, die mit der Untersetzungsstufe (44) verbunden ist, und eine distale axiale Seite gegenüber der proximalen axialen Seite und die dazu bestimmt ist, an dem Kugelmahlelement befestigt zu werden, umfasst, dadurch, dass
- das Untersetzungsgetriebe einen axialen Anschlag (66) umfasst, der angepasst ist, um die Ausgangswelle (46) axial zu führen, und der angepasst ist, um eine axiale Verschiebung der Ausgangswelle (46) in einer Richtung zu begrenzen, die von der proximalen axialen Seite zu der distalen axialen Seite gerichtet ist, und dass
- das Kugelmahlelement (6) durch eine Befestigungskupplung (69) an der Ausgangswelle (46) befestigt ist.

2. Kugelmühle nach Anspruch 1, wobei das Axiallager (66) entweder ein Axiallager, insbesondere ein hydrostatisches oder hydrodynamisches Lager, oder ein Wälzkörperlager ist.

3. Kugelmühle nach Anspruch 1 oder 2, wobei
- das Untersetzungsgetriebegehäuse (40) eine Ausgangswand (52) umfasst, die eine Ausgangsöffnung (58) begrenzt, die von der Ausgangswelle durchquert wird,
- das Untersetzungsgetriebe ein radiales Ausgangslager (60), insbesondere ein radiales Lager, umfasst, das in der Ausgangsöffnung angeordnet ist, und
- die Ausgangswelle (46) durch das radiale Ausgangslager in Bezug auf die Ausgangswand geführt wird.

4. Kugelmühle nach Anspruch 3, wobei der axiale Anschlag (66) axial zwischen der Untersetzungsstufe und der Ausgangswand (52) angeordnet ist, insbesondere wobei sich der axiale Anschlag (66) an der Ausgangswand abstützt.

5. Kugelmühle nach einem der vorherigen Ansprüche, wobei die Ausgangswelle (46) einen Befestigungsflansch (64) aufweist, der angepasst ist, um das Kugelmahlelement zu befestigen.

6. Kugelmühle nach einem der Ansprüche 1 bis 5, wobei die Untersetzungsstufe (44) eine Planetenuntersetzungsstufe (70) umfasst, und wobei diese Planetenuntersetzungsstufe mit Folgendem versehen ist:
- einem Satellitenträger (72),
- einem Kranz (74),
- einem Sonnenrad (76) und
- Satellitenrädern (78),
- insbesondere wobei die Ausgangswelle (46) an dem Planetenträger (72) befestigt ist, und/oder wobei die Eingangswelle (42) an dem Sonnenrad (76) befestigt ist.

7. Kugelmühle nach einem der Ansprüche 1 bis 6, wobei die Untersetzungsstufe mindestens einen einfachen parallelen Getriebezug, insbesondere mit Stirnrädern, umfasst.

8. Kugelmühle nach einem der Ansprüche 1 bis 7, wobei das Mahlelement (6) über das Antriebsuntersetzungsgetriebe vollständig in Bezug auf das Mahlgehäuse (4) geführt und gehalten wird.

9. Kugelmühle nach einem der Ansprüche 1 bis 8, wobei das Mahlelement (6) durch das Getriebe (14) in Bezug auf das Mahlgehäuse (4) freitragend gehalten wird, und/oder wobei das Mahlelement (6) ein freies Ende aufweist, das von dem Mahlgehäuse beabstandet ist.

10. Kugelmühle nach einem der Ansprüche 1 bis 9, wobei alle auf das Kugelmahlelement wirkenden Kräfte, insbesondere alle Mahlkräfte, nur von dem axialen Lager (66) und gegebenenfalls von dem radialen Lager (60) aufgenommen werden.

11. Verwendung einer Mühle nach einem der Ansprüche 1 bis 10, **gekennzeichnet durch** den folgenden Schritt:
- Aufnehmen aller Kräfte, die auf das Kugelmahlelement wirken, und insbesondere aller Mahlkräfte, insbesondere beim Mahlen mit einer Nennleistung der Mühle, durch den axialen Anschlag (66) und gegebenenfalls durch das radiale Lager (60).
Aufnehmen aller auf das Kugelmahlelement wirkenden Kräfte, insbesondere aller Mahlkräfte, insbesondere beim Mahlen mit einer Nennleistung der Mühle, durch den axialen Anschlag und gegebenenfalls durch das radiale Lager.

## Claims

1. Agitator mill (2), of the type comprising:
- a milling housing (4),
- an agitator milling element (6),
- a drive reducer (14) for the milling element, **characterised in that** the drive reducer comprises:
- a gearbox housing (40),
- an input shaft (42) suited to be connected to a drive motor,
- a reduction stage (44) located in the gearbox housing, and
- an output shaft (46), which extends along an output axis (Y-Y), **in that**
this output shaft (46) is connected to an agitation milling element which is adapted to be driven by the reduction stage, **in that**
- the output shaft (46) comprises an axial proximal side, associated with the reduction stage (44), and an axial distal side, opposite the proximal axial side and intended to be fixed to the agitation milling element, **in that**
- the gearbox comprises an axial stop (66), which is adapted to axially guide the output shaft (46) and which is adapted to limit an axial displacement of the output shaft (46) in a direction from the proximal axial side to the distal axial side, and **in that**
- the agitation milling element (6) is fixed to the output shaft (46) by a fixing coupling (69).

2. An agitator mill according to claim 1, in which the axial stop (66) is either an axial bearing, in particular hydrostatic or hydrodynamic, or a rolling element stop.

3. An agitator mill as claimed in claim 1 or 2, wherein
- the gearbox housing (40) comprises an output wall (52) defining an output opening (58) through which the output shaft passes,
- the gearbox comprises a radial output bearing (60), in particular a radial bearing, arranged in the output opening, and
- the output shaft (46) is guided relative to the output wall by the radial output bearing.

4. An agitator mill according to claim 3, in which the axial stop (66) is arranged axially between the reduction stage and the outlet wall (52), in particular in which the axial stop (66) is supported on the outlet wall.

5. An agitator mill according to any one of the preceding claims, wherein, the output shaft (46) comprises a securing flange (64) adapted to secure the agitator milling element.

6. An agitator mill according to any one of claims 1 to 5, wherein the reduction stage (44) comprises a planetary reduction stage (70), and wherein this planetary reduction stage is provided with:
- a satellite carrier (72),
- a crown (74),
- a sun wheel (76), and
- satellite wheels (78),
- in particular in which the output shaft (46) is fixed to the planet carrier (72) and/or in which the input shaft (42) is fixed to the sun wheel (76).

7. An agitator mill according to any one of claims 1 to 6, in which the reduction stage comprises at least one simple parallel gear train, in particular with cylindrical toothed wheels.

8. An agitator mill according to any one of claims 1 to 7, in which the milling element (6) is guided and held with respect to the milling housing (4) completely by means of the drive gearbox.

9. An agitator mill according to any one of claims 1 to 8, wherein the milling element (6) is held cantilevered by the gearbox (14) relative to the milling housing (4) and/or, wherein the milling element (6) comprises a free end which is spaced from the milling housing.

10. An agitator mill according to any one of claims 1 to 9, in which all the forces acting on the stirred milling element, and in particular all the milling forces, are taken up solely by the axial stop (66), and optionally by the radial bearing (60).

11. The monitoring method according to any of claims 1 to 10, **characterised in that** it comprises:
- absorption of all the forces acting on the milling element by agitation, and in particular all the milling forces, in particular during milling at nominal mill power, by the axial stop (66), and possibly by the radial bearing (60).
absorption of all the forces acting on the milling element by agitation, and in particular all the milling forces, in particular during milling at nominal mill power, by the axial stop and possibly by the radial bearing.
